# EUROPÄISCHE PATENTSCHRIFT

(11) **EP 2 718 060 B1**
(45) Veröffentlichungstag und Bekanntmachung des Hinweises auf die Patenterteilung: **11.03.2015**
(21) Anmeldenummer: 12730192.7
(22) Anmeldetag: 13.06.2012
(51) Int. Cl.: B23K 9/028, B23K 37/02, B23K 37/053

(54) **VORRICHTUNG ZUM EINSPANNEN UND AUSRICHTEN VON SEGMENTARTIG AUSGEBILDETEN, DÜNNWANDIGEN UND HOHLPROFILIERTEN BAUTEILEN**
DEVICE FOR MOUNTING AND ALIGNING SEGMENTED, THIN-WALLED AND HOLLOW-PROFILED COMPONENTS
DISPOSITIF DE SERRAGE ET D'ORIENTATION D'ÉLÉMENTS DE TYPE SEGMENT, À PAROI MINCE ET À PROFIL CREUX

(30) Priorität: 13.06.2011 DE 102011106063; 09.09.2011 DE 102011053481
(43) Veröffentlichungstag der Anmeldung: 16.04.2014
(73) Patentinhaber: MT Aerospace AG, 86153 Augsburg (DE)
(72) Erfinder: HUBER, Willibald, 85305 Jetzendorf (DE)
(74) Vertreter: Grape & Schwarzensteiner
(86) Internationale Anmeldenummer: PCT/EP2012/061238
(87) Internationale Veröffentlichungsnummer: WO 2012/171977

(56) Entgegenhaltungen:
- EP-A1- 1 424 159
- WO-A1-2007/110514
- DE-U1-202008 013 825

## Beschreibung

Die vorliegende Erfindung betrifft eine Vorrichtung zum Einspannen und Ausrichten von segmentartig ausgebildeten, dünnwandigen und hohlprofilierten Bauteilen und deren Verwendung.

Derartige Vorrichtungen sind zur Fertigung von segmentartig ausgebildeten, dünnwandigen und hohlprofilierten Bauteilen, wie etwa Druckbehältern zur Speicherung kryogener Flüssigkeiten, insbesondere von flüssigem Wasserstoff (LH2), allgemein bekannt. Vorrichtungen dieser Art sind bekannt aus WO 2007/110514. Solche Druckbehälter bzw. Tanks können in allen automotiven Bereichen, wie der Luft- und Raumfahrt, im Schiffs- und Bootsbau und insbesondere in der Automobilindustrie, Anwendung finden. Ein großes Problem bei der Fertigung solcher Druckbehälter resultiert aus deren beliebig variierenden Formen, deren außerordentlich großen Abmessungen mit einem Durchmesser von bis ca. 6,0 m oder mehr und einer Länge von bis zu 25 m sowie im Verhältnis dazu extrem geringen Wandstärken mit einer Wanddicke im Bereich von ca. 3,3 mm bis maximal 7 mm. Nicht zuletzt hieraus besitzt eine bisher in der Praxis verwendete Vorrichtung erhebliche Nachteile, bei welcher die Bauteile zwischen zwei sich auf einer Basis abstützenden, von einander getrennten Maschinen-Drehtischen eingespannt und sodann in horizontaler Lage ausgerichtet, bearbeitet und schließlich gefügt und verschweißt werden. Demzufolge gestaltet sich eine Synchronisierung der beiden Maschinen-Drehtische als ausgesprochen aufwendig. Eine horizontale Längsverfahrung der beiden Maschinen-Drehtische zueinander von ca. 20 m, die hochgenau erfolgen muss, ist einerseits nur mit größtem Aufwand erreichbar, ist andererseits gerade auch im Vergleich zu dem betriebenen Aufwand als nur mäßig befriedigend zu bezeichnen. Ein vornehmliches Problem besteht auch in der horizontalen Ausrichtung der Bauteile selbst und der damit auf die Maschinen-Drehtische und Bauteile gleichermaßen einwirkende Schwerkraft. Mithin sind hohe Steifigkeiten der Maschinen-Drehtische und des die Bauteile übergreifenden Spannkäfigs bei der Fertigung erforderlich. Dies erhöht das Gewicht der konstruktiven Ausgestaltung von Maschinen-Drehtisch, Spannkäfig und Bauteilen insgesamt wesentlich, was wiederum die Montier- und Justierbarkeit erheblich beeinträchtigt. Bei alledem kommt schließlich erschwerend hinzu, dass die Bauteile voneinander erheblich differieren und die Maschinen-Drehtische zum Teil miteinander verzahnt sind. Eine voneinander unabhängige Bearbeitung auf den Maschinen-Drehtischen ist daher oftmals nicht möglich.

Der vorliegenden Erfindung liegt daher die Aufgabe zugrunde, eine Vorrichtung zum Einspannen und Ausrichten von segmentartig ausgebildeten, dünnwandigen und hohlprofilierten Bauteilen zur Verfügung zu stellen, mit welcher sich die obigen Nachteile verhindern lassen, welche mithin konstruktiv besonders einfach ausgestaltet ist und eine ausgesprochen hohe Montage- bzw. Fertigungsgenauigkeit ermöglicht und deren Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung der erfindungsgemäßen Vorrichtung zum Einspannen und Ausrichten von segmentartig ausgebildeten, dünnwandigen und hohlprofilierten Bauteilen, umfassend eine auf/an einer Basis abgestützte Tragstruktur oder dergleichen Rahmengestell und zwei von der Tragstruktur gemeinsam aufgenommene und gehaltene Einrichtungen zum Einspannen von zwei segmentartig ausgebildeten, dünnwandigen und hohlprofilierten Bauteilen, wobei die zwei Spanneinrichtungen auf einer gemeinsamen Längsachse angeordnet und auf der gemeinsamen Längsachse zueinander in axialer Richtung relativ bewegbar sind, wobei die zwei Spanneinrichtungen derart ausgebildet sind, dass die zwei Bauteile um die gemeinsame Längsachse der zwei Spanneinrichtungen in Umfangsrichtung zueinander relativ verdrehbar sind, und wobei die Längsachse der zwei Spanneinrichtungen beim Einspannen und Ausrichten der zwei Bauteile zueinander zu der die Tragstruktur abstützenden Basis senkrecht oder im Wesentlichen senkrecht verlaufend ausrichtbar ist, wird eine besonders einfache, zudem kompakte und stabile Bauweise der Vorrichtung erreicht. Gleichzeitig können sämtliche Bauteile dadurch, dass die zwei Spanneinrichtungen auf einer gemeinsamen Längsachse angeordnet und auf der gemeinsamen Längsachse zueinander in axialer Richtung relativ bewegbar sind, vertikal montiert, bearbeitet (Vorbereitung bzw. Fräsung der Bauteile), (ein)gespannt, gefügt, und komplett umlaufend geprüft werden. Die großen labilen Bauteile mit einem Durchmesser von ca. 6 m lassen sich so wesentlich einfacher, schneller und sicherer rüsten und behandeln. Dadurch werden zugleich die Montagezeit wesentlich reduziert und die Qualität entsprechend gesteigert. Da die zwei Spanneinrichtungen auf einer gemeinsamen Längsachse angeordnet und somit auf einem einzigen Maschinen-Drehtisch integriert sind, lässt sich eine hochsteife und ausgesprochen momentenstarre Konstruktion der Vorrichtung nach der Erfindung erhalten. Nachdem sich die zwei Spanneinrichtungen folglich auf/an ein und derselben Basis abstützen, sind zusätzlich auftretende Kräfte, auch Reibungen, und Momente weitgehend vermieden, jedenfalls erheblich vermindert. Infolge der Konzentrizität der beiden Spanneinrichtungen zueinander ist eine ausgesprochen hohe Planlaufgenauigkeit erreicht. Die zwei Spanneinrichtungen und damit einhergehend die zu fügenden Bauteile können zentrisch mit der integrierten Hub- und Senkeinrichtung einerseits und der integrierten Dreheinrichtung andererseits positioniert und vorgespannt werden. Wie die Praxis gezeigt hat, lassen sich Lagergenauigkeiten von ca. 0,05 mm erreichen. Eine horizontale Ausrichtung der zwei Spanneinrichtungen entsprechend der bekannten Vorrichtung ist nicht notwendig, wodurch zugleich eine Bildung eines Spaltes am Umfang der zu fügenden Bauteile sicher verhindert ist. Weiterhin wird die Synchronisierung der zwei Spanneinrichtungen durch die erfindungsgemäße Vorrichtung wesentlich vereinfacht. Hohe Synchronisationsmomente, die beide Spanneinrichtungen beaufschlagen können, sind vollständig ausgeschlossen. Versetzungen, Fertigungsungenauigkeiten und sonstige Qualitätsmängel lassen sich dadurch sicher vermeiden. Damit einhergehend kann auch eine Verspannung und/oder Unrundheit der hohlprofilierten Bauteile mittels der Vorrichtung nach der Erfindung auf einfache Weise korrigiert bzw. aufgehoben werden. Das hohlprofilierte Bauteil, das in der erfindungsgemäß ausgebildeten Vorrichtung gegebenenfalls zur weitergehenden Bearbeitung eingespannt wurde, besitzt eine ausgesprochen hohe Montage- und Fertigungsgenauigkeit. So lassen sich mit der erfindungsgemäßen Vorrichtung insbesondere hohlprofilierte Bauteile, wie Zylinderschüsse oder dergleichen, mit großem Durchmesser, jedoch verhältnismäßig geringer Wanddicke einfach bearbeiten und miteinander verschweißen oder verkleben und zu qualitativ äußerst hochwertigen, hochfesten Druckbehältern zusammenfügen. Im Ergebnis wird die Maßgenauigkeit wesentlich erhöht und weist der später fertiggestellte Druckbehälter eine weiter erhöhte Festigkeit auf.

Vorteilhafte konstruktive Einzelheiten der erfindungsgemäßen Vorrichtung sind in den Ansprüchen 2 bis 23 beschrieben.

Entsprechend den Merkmalen nach Anspruch 2 umfasst die Tragstruktur in vorteilhafter Weise zwei sich auf/an der Basis abstützende und an der Basis einander gegenüberliegend befestigbare Tragelemente, zwischen denen die zwei Spanneinrichtungen aufgenommen und gehalten sind. Auf diese Weise wird einerseits die Steifigkeit der erfindungsgemäßen Vorrichtung erhöht. Andererseits ist eine gleichseitige Abstützung der Tragstruktur ermöglicht, so dass ein ungleichmäßiger Kraft- und Momentenfluss und eine damit unter Umständen einhergehende Verkantung der Tragstruktur gegenüber den Tragelementen ausgeschlossen ist.

Von ganz besonders großer Bedeutung sind die konstruktiven Maßnahmen des Anspruchs 3, wonach die Tragstruktur eine Einrichtung zum Drehen oder Verschwenken der zwei Spanneinrichtungen relativ zu der die Tragstruktur abstützenden Basis umfasst. Hierdurch ist es möglich, die zwei Bauteile so zu drehen bzw. verschwenken, dass jede Schweißnaht in der jeweils optimalen Lage erzeugt wird, indem die flüssige Schweißschmelze in optimale/r Lage, nämlich in sogenannte/r Wannenlage zur Erdanziehung, ausgerichtet und erzeugt wird. Durch die Möglichkeit der Drehung bzw. Verschwenkung der zwei Spanneinrichtungen lässt sich die Güte der Schweißnähte erheblich verbessern, und zwar unabhängig von der Form und Abmessung der zwei Bauteile und der zu erzielenden Schweißnähte selbst. Bei sehr anspruchsvollen Schweißnähten, wie beispielsweise in der Raumfahrt gefordert, liegt die Nahtqualität um ca. 30% höher bzw. treten Schweißfehler entsprechend weniger auf. Bei alledem kommt hinzu, dass auf diese Weise selbst komplexe mehrteilige Druckbehälter bzw. Tanks mit der erfindungsgemäßen Vorrichtung komplett herstellbar sind.

Dabei liegt es im Rahmen der Erfindung, dass die Dreh- oder Verschwenkeinrichtung der Tragstruktur nach Anspruch 4 eine Drehachse, die zwischen der Tragstruktur und den zwei Spanneinrichtungen angeordnet ist, umfasst.

In vorteilhafter Weise umfasst die Dreh- oder Verschwenkeinrichtung der Tragstruktur nach Anspruch 5 eine Antriebseinrichtung mit wenigstens einem, insbesondere vier, Antriebsmotor/en, der/die an der Tragstruktur angeordnet ist/sind, und mindestens einem, insbesondere zwei, mit dem/den Antriebsmotor/en zusammenwirkenden Antriebselement/en, das/die den zwei Spanneinrichtungen zugeordnet ist/sind.

In diesem Zusammenhang ist erfindungsgemäß vorgesehen, dass das mindestens eine mit dem wenigstens einen Antriebsmotor zusammenwirkende Antriebselement der Antriebseinrichtung nach Anspruch 6 segment- oder scheibenförmig ausgebildet und an dessen/deren Umfang mit einer Profilierung, insbesondere einer Verzahnung, Zähnen oder einem Zahnradkranz, versehen ist. Die segment- oder scheibenförmige Ausbildung hängt von dem Winkel, um welchen die zwei Spanneinrichtungen relativ zu der Tragstruktur gedreht bzw. verschwenkt werden soll. Ist beispielsweise eine Drehung bzw. Verschwenkung um einen Winkel von 360° beabsichtigt, sollte das Antriebselement scheibenförmig ausgestaltet sein. Bei einer Verschwenkung um einen Winkel kleiner 360° kann das Antriebselement als Segment mit entsprechend vorbestimmten Winkel ausgebildet sein.

Zweckmäßigerweise ist das wenigstens eine Antriebselement nach Anspruch 7 außenseitig an den zwei Spanneinrichtungen unlösbar befestigt.

Entsprechend Anspruch 8 sind die zwei Spanneinrichtungen aus einer äußeren oder außen liegenden Spanneinrichtung und einer von der äußeren oder außen liegenden Spanneinrichtung umgebenden inneren oder innen liegenden Spanneinrichtung gebildet.

Weiter liegt es im Rahmen der Erfindung, zwischen den zwei Spanneinrichtungen nach Anspruch 9 eine Hub- und Senkeinrichtung zur relativen Bewegung der zwei Spanneinrichtungen auf der gemeinsamen Längsachse zueinander in axialer Richtung anzuordnen.

Die Hub- und Senkeinrichtung umfasst nach Anspruch 10 wenigstens eine, insbesondere die vier, Hub- und Senkantriebseinrichtung/en umfasst, die insbesondere jeweils mit einem Antriebsmotor, der an einer, vorzugsweise an der inneren, der zwei Spanneinrichtungen angeordnet ist, und einem Tragelement sowie gegebenenfalls einem Führungselement, welches endseitig von einer, vorzugsweise von der äußeren, der zwei Spanneinrichtungen drehfest aufgenommen ist, versehen ist/sind. Demnach ist mit der erfindungsgemäßen Vorrichtung eine ausgesprochen genaue und vor allem kippstabile vertikale Positionierung der zwei Spanneinrichtungen zueinander möglich.

Darüber hinaus sorgen die Merkmale nach Anspruch 11 für ein weitere Verbesserung der Positioniergenauigkeit der zwei Spanneinrichtungen zueinander und Gleichlaufeigenschaften der Hub- und Senkeinrichtung selbst. Demnach ist/sind die wenigstens eine, insbesondere die vier, Hub- und Senkantriebseinrichtung/en der Hub- und Senkeinrichtung jeweils zueinander, vorzugsweise auf einem gemeinsamen Umfang, etwa gleich beabstandet.

Gleiches gilt für die Maßnahmen des Anspruchs 12. Zudem ist auf diese Weise einer Verschmutzung der erfindungsgemäßen Vorrichtung wirksam entgegengewirkt. Danach ist/sind das wenigstens eine, insbesondere die vier, Tragelement/e in Form einer Gewindespindel, insbesondere als selbsthemmende Gewindespindel, vorzugsweise als Trapezgewindespindel oder Planeten-Rollenspindel, ausgebildet.

Von außerordentlich großer Bedeutung für eine zusätzliche Vereinfachung der Bauweise und weitergehende Erhöhung der Montage- bzw. Fertigungsgenauigkeit der erfindungsgemäßen Vorrichtung mit sämtlichen damit einhergehenden, bereits erwähnten Vorteilen sind die Maßnahmen des Anspruchs 13, wonach die zwei Spanneinrichtungen jeweils eine Dreheinrichtung zur relativen Verdrehung der zwei Bauteile um die gemeinsame Längsachse der zwei Spanneinrichtungen zueinander in Umfangsrichtung umfassen.

Vorteilhafterweise umfasst die Dreheinrichtung der zwei Spanneinrichtungen nach Anspruch 14 in diesem Zusammenhang jeweils ein etwa ringförmig ausgebildetes Tragelement zum Aufnehmen, Einspannen und Ausrichten der Bauteile zueinander.

Von besonderem Interesse sind darüber hinaus die Merkmale des Anspruchs 15. Danach umfasst die Dreheinrichtung der zwei Spanneinrichtungen jeweils eine Antriebseinrichtung mit wenigstens einem, insbesondere zwei, Antriebsmotor/en, der/die an der jeweiligen Spanneinrichtung angeordnet ist/sind, und einem mit dem/den Antriebsmotor/en zusammenwirkenden Antriebselement, das dem etwa ringförmig ausgebildeten Tragelement der jeweiligen Spanneinrichtung zugeordnet ist. Durch die Anordnung von zwei Antriebsmotoren ist es möglich, die Genauigkeit der erfindungsgemäßen Vorrichtung beim Einspannen und Ausrichten der zwei Bauteile zueinander grundsätzlich noch weiter zu erhöhen. Werden zum Beispiel die zwei Antriebsmotoren mit (geringfügig) unterschiedlicher Geschwindigkeit betrieben, wird eine Vorspannung erzeugt und damit ein möglicherweise vorhandenes Spiel aufgehoben.

Nach Anspruch 16 ist das mit dem wenigstens einen, insbesondere den zwei, Antriebsmotor/en zusammenwirkende Antriebselement der Antriebseinrichtung der Dreheinrichtung an dessen Umfang mit einer Profilierung, insbesondere einer Verzahnung, Zähnen oder einem Zahnkranz, versehen.

Dabei ist das Antriebselement der Antriebseinrichtung der Dreheinrichtung nach Anspruch 17 außenseitig an dem etwa ringförmig ausgebildeten Tragelement der jeweiligen Spanneinrichtung unlösbar befestigt.

Des Weiteren ist entsprechend Anspruch 18 erfindungsgemäß vorgesehen, dass der wenigstens eine, insbesondere die zwei, an der jeweiligen Spanneinrichtung angeordnete/n Antriebsmotor/en der Antriebseinrichtung der Dreheinrichtung jeweils zueinander, vorzugsweise auf einem gemeinsamen Umfang, etwa gleich beabstandet ist/sind. Auch hierdurch wird eine gleichmäßige Kraftübertragung erhalten. Durch eine solche Teilung von 180° heben sich auftretende Kräfte gegenseitig auf, wodurch wiederum Eigenschwingungen vermieden werden.

Durch die konstruktiven Maßnahmen nach Anspruch 19, wonach die zwei Spanneinrichtungen jeweils ein an dem etwa ringförmig ausgebildeten Tragelement der jeweiligen Spanneinrichtung lösbar befestigbares Spannelement umfassen, ist das jeweilige Bauteil an dem etwa ringförmig ausgebildeten Tragelement der jeweiligen Spanneinrichtung einspannbar und festlegbar.

Das Spannelement kann in diesem Zusammenhang gemäß Anspruch 20 als Spannsystem mit mindestens einem Keilspannelement und/oder wenigstens einem Schlauchspannelement, Spannkorb, Spannkreuz oder Spannspinne ausgebildet sein.

Um eine individuelle Anpassung auf/an die Form und Abmessung des jeweiligen Bauteiles und eine vielseitige Einsatzmöglichkeit zu erhalten, ist das Spannelement nach Anspruch 21 starr und/oder auf- und einklappbar und/oder ausbreit- und zusammenlegbar und/oder aus einer Kombination daraus ausgebildet.

Entsprechend den Maßnahmen des Anspruchs 22 ist den zwei Spanrieinrichtungen vorzugsweise eine Einrichtung zur Bearbeitung mindestens eines Teils des/der zwei segmentartig ausgebildeten, dünnwandigen und hohlprofilierten Bauteile/s zugeordnet.

In vorteilhafter Weise liegt es im Rahmen der Erfindung, die Einrichtung zur Bearbeitung des mindestens einen Teils des/der zwei segmentartig ausgebildeten, dünnwandigen und hohlprofilierten Bauteile/s nach Anspruch 23 als Schweiß-, Löt- oder Klebeeinrichtung bzw. Schneideeinrichtung bzw. Schleif-, Fräs-, Dreh- oder dergleichen flächen- und spanbearbeitende sowie güte- und materialprüfende Einrichtung auszubilden. Die Schweißeinrichtung kann auf Wolfram-Inertgas (TIG)-, Metall-Inertgas (MIG)-, Rührreib (FSW)-, Elektronenstrahl (EB)-, Laser-, Plasmaschweißen oder jedem anderen geeigneten Schweißverfahren basieren.

Diese Aufgabe wird schließlich noch in verwendungsmäßiger Hinsicht durch die Merkmale der Ansprüche 24 bis 27 gelöst.

Nach Anspruch 24 ist die erfindungsgemäße Vorrichtung vorzugsweise zum Einspannen, insbesondere spannungsfreien Einspannen, zur Montage von segmentartig ausgebildeten, dünnwandigen und hohlzylindrischen Bauteilen und Behältern, Domen sowie Boostergehäusen von Raketen oder ähnlichen hohlzylindrischen Geräten großer Abmessungen vorgesehen.

Darüber hinaus kann die erfindungsgemäße Vorrichtung entsprechend Anspruch 25 dem Bearbeiten, insbesondere dem Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen und Behältern, Domen sowie Boostergehäusen oder ähnlichen hohlzylindrischen Geräten großer Abmessungen dienen.

Schließlich liegt es noch im Rahmen der Erfindung, die erfindungsgemäße Vorrichtung nach Anspruch 26 zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen zu verwenden.

Ganz besonders eignet sich die erfindungsgemäße Vorrichtung dabei nach Anspruch 27 zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

Weitere Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: eine schematische Seitenansicht eines aus segmentartig ausgebildeten, dünnwandigen und hohlprofilierten Bauteilen gefertigten Treibstofftanks,
- Fig. 2: eine schematische perspektivische Ansicht einer Ausführungsform einer erfindungsgemäß ausgebildeten Vorrichtung zum Einspannen und Ausrichten von segmentartig ausgebildeten, dünnwandigen und hohlprofilierten Bauteilen, in vertikal nach oben gerichteter Stellung,
- Fig. 3 und 4: eine schematische perspektivische Vorder- und Rückansicht der Ausführungsform der erfindungsgemäß ausgebildeten Vorrichtung nach der Fig. 2, in etwa horizontal zur Seite gerichteter Stellung,
- Fig. 5 bis 8: eine Vorderansicht, eine Draufsicht und eine Seitenansicht sowie eine teilweise abgebrochene Seitenansicht der Ausführungsform der erfindungsgemäß ausgebildeten Vorrichtung nach der Fig. 2,
- Fig. 9: eine schematische, teilweise abgebrochene perspektivische Vorderansicht der Ausführungsform der erfindungsgemäß ausgebildeten Vorrichtung nach der Fig. 2, in vergrößerter Darstellung,
- Fig. 10 und 11: eine perspektivische Seitenansicht und eine Vorderansicht einer Ausführungsform einer erfindungsgemäß ausgebildeten Tragstruktur,
- Fig. 12: eine perspektivische Ansicht einer Ausführungsform einer erfindungsgemäß ausgebildeten äußeren Spanneinrichtung,
- Fig. 13 bis 15: eine perspektivische Ansicht, eine Seitensicht und eine Draufsicht auf eine Ausführungsform einer erfindungsgemäß ausgebildeten inneren Spanneinrichtung,
- Fig. 16: eine schematische, teilweise abgebrochene perspektivische Vorderansicht einer Ausführungsform einer erfindungsgemäß ausgebildeten Hub- und Senkeinrichtung,
- Fig. 17: eine schematische, teilweise abgebrochene perspektivische Vorderansicht einer Ausführungsform einer erfindungsgemäß ausgebildeten Dreheinrichtung, in vergrößerter Darstellung, und
- Fig. 18 bis 20: perspektivische Ansichten verschiedener Ausführungsformen von erfindungsgemäß ausgebildeten Vorrichtungen zum Einspannen und Ausrichten von segmentartig ausgebildeten, dünnwandigen und hohlprofilierten Bauteilen.

Bei der nachfolgenden Beschreibung von Ausführungsbeispielen der erfindungsgemäßen Vorrichtung 10 zum Einspannen und Ausrichten von segmentartig ausgebildeten, dünnwandigen und hohlprofilierten Bauteilen 12 sind einander entsprechende, gleiche Bauteile jeweils mit identischen Bezugsziffern versehen.

Die Vorrichtung 10 nach der Erfindung ist zum Einspannen, insbesondere spannungsfreien Einspannen, zur Montage von segmentartig ausgebildeten, dünnwandigen und hohlzylindrischen Bauteilen und Behältern, Domen sowie Boostergehäusen von Raketen oder ähnlichen hohlzylindrischen Geräten großer Abmessungen vorgesehen.

Die erfindungsgemäße Vorrichtung 10 eignet sich insbesondere zum Bearbeiten, insbesondere zum Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen und Behältern, Domen sowie Boostergehäusen oder ähnlichen hohlzylindrischen Geräten großer Abmessungen.

Darüber hinaus findet die erfindungsgemäße Vorrichtung 10 vorzugsweise zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen Verwendung.

In ganz bevorzugter Weise dient die erfindungsgemäße Vorrichtung 10 dem Herstellen von Bauteilen 12, wie etwa Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

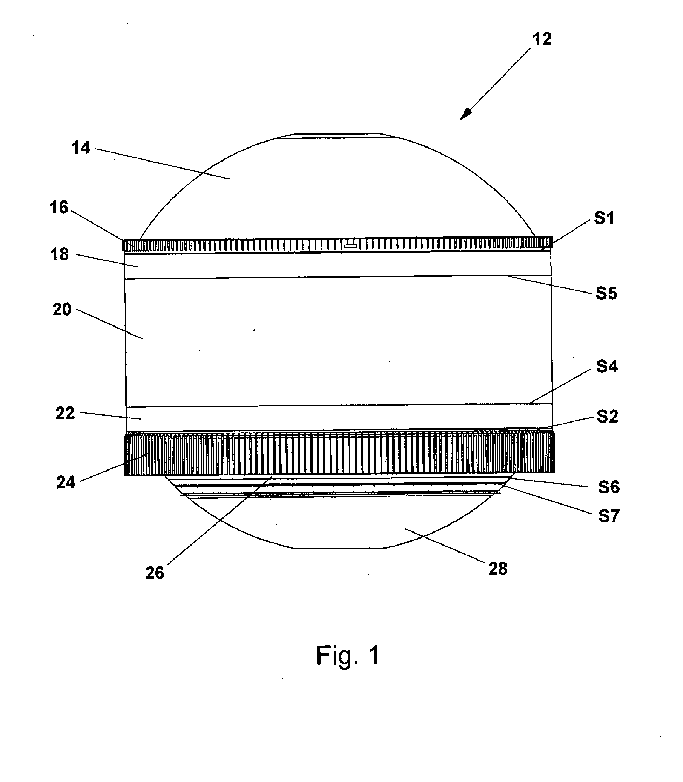

Ein solcher fertig hergestellter Behälter 12 ist in der Fig. 1 beispielhaft als ein Treibstofftank der Oberstufe der Ariane 5 dargestellt. Der Treibstofftank ist aus einer Vielzahl von segmentartig ausgebildeten, dünnwandigen und hohlprofilierten Bauteilen 12 zusammengesetzt, die sich in Form und Abmessung voneinander erheblich unterscheiden. Entsprechend der Fig. 1 ist der Treibstofftank aus einem Upper Bulkhead 14, einem Upper Skirt 16, einem Upper Y-Ring 18, einem Hohlzylinder 20, einem Lower Y-Ring 22, einem elongated Lower Skirt 24, einem Inner Dome (nicht zu sehen) inklusive X-Ring 26 und einem LOX Dome 28 gebildet. Die einzelnen einander benachbarten Bauteile 12 sind jeweils miteinander zu verschweißen, wobei zum Beispiel die entsprechenden Schweißnähte S1, S2, S4, S5, S6 und S7 sämtlich einfach, schnell und präzisionsgenau mittels der erfindungsgemäßen Vorrichtung 10 erzeugt werden können.

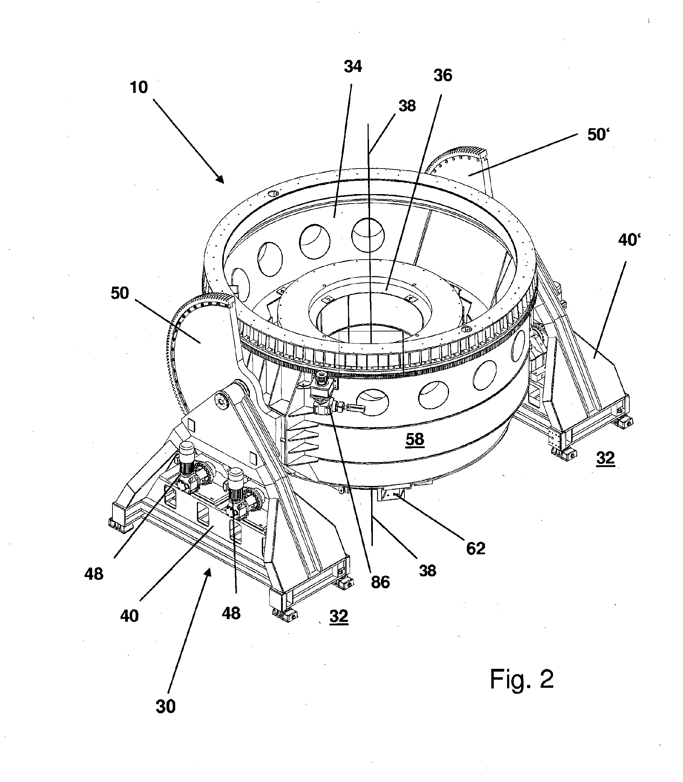

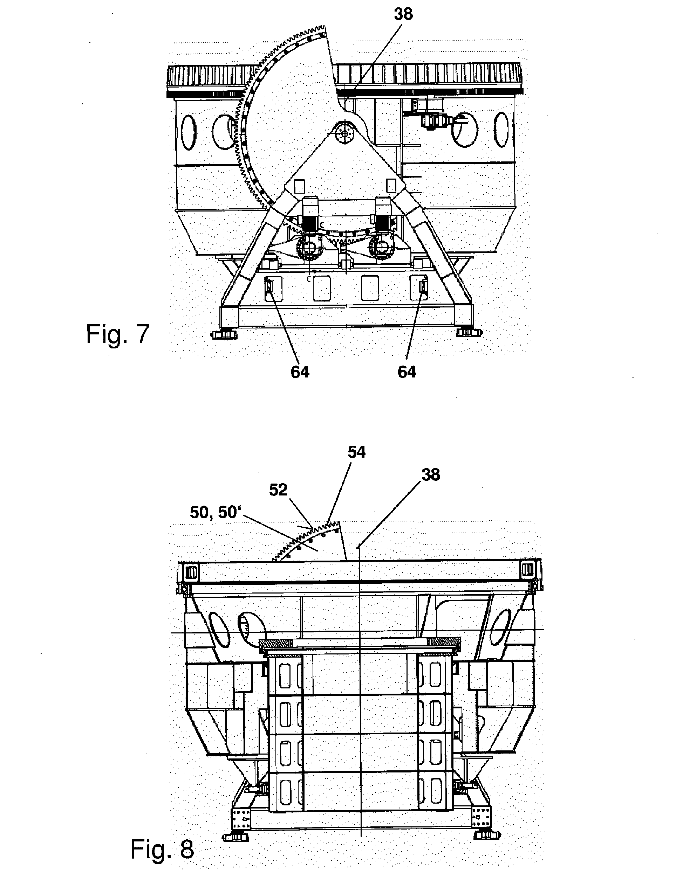

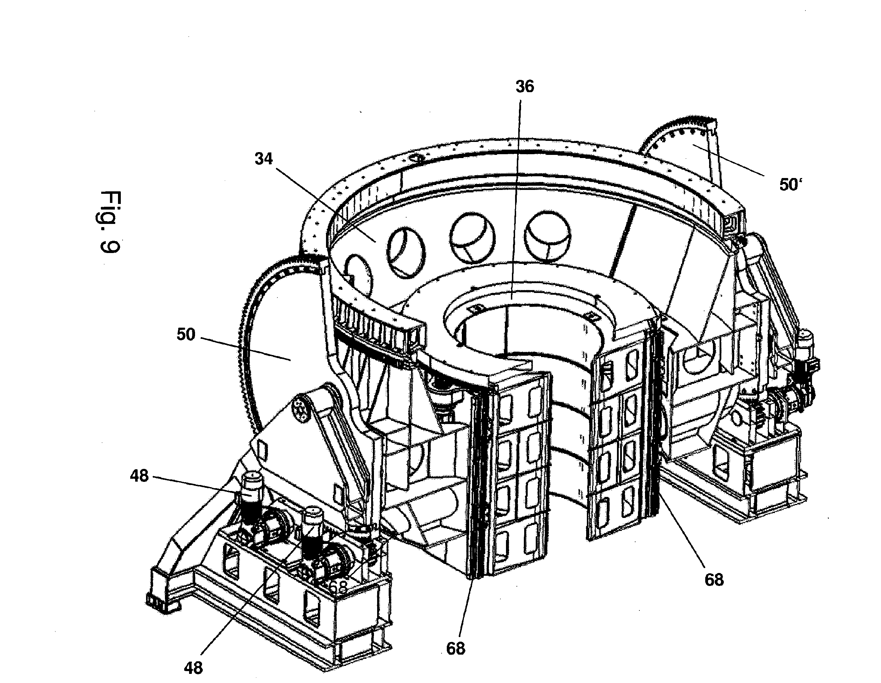

In den Fig. 2 bis 9 ist eine Ausführungsform der erfindungsgemäßen Vorrichtung 10 zum Einspannen und Ausrichten der segmentartig ausgebildeten, dünnwandigen und hohlprofilierten Bauteile 12 gezeigt.

Die erfindungsgemäße Vorrichtung 10 umfasst eine Tragstruktur 30 oder dergleichen Rahmengestell bzw. quasi Maschinentisch. Die Tragstruktur 30 ist auf/an einer Basis 32 abgestützt. Bei der Basis 32 handelt es sich um ein Fundament, einen (Fundament-)Boden eines Gebäudes oder eine sonstige Grundkonsole.

Des Weiteren umfasst die erfindungsgemäße Vorrichtung 10 zwei Einrichtungen 34, 36 zum Einspannen der zwei segmentartig ausgebildeten, dünnwandigen und hohlprofilierten Bauteile 12. Die zwei Spanneinrichtungen 34, 36 sind aus einer äußeren oder außen liegenden Spanneinrichtung 34 und einer inneren oder innen liegenden Spanneinrichtung 36 gebildet. Die innere Spanneinrichtun 36 ist von der äußeren oder außen liegenden Spanneinrichtung 34 umgeben.

Die zwei Spanneinrichtungen 34, 36 sind von der Tragstruktur 30, wie aus den Fig. 2 bis 9 ersichtlich ist, gemeinsam aufgenommen und gehalten. Mithin sind die zwei Spanneinrichtungen 34, 36 auf einem einzigen quasi Maschinentisch integriert. Die zwei Spanneinrichtungen 34, 36 sind daher bereits per se zueinander ausgerichtet, was sich äußerst positiv gleichermaßen auf eine besonders einfache, kompakte und zuverlässige Bauweise zum einen und auf eine ausgesprochen hohe Montage- bzw. Fertigungsgenauigkeit zum anderen auswirkt.

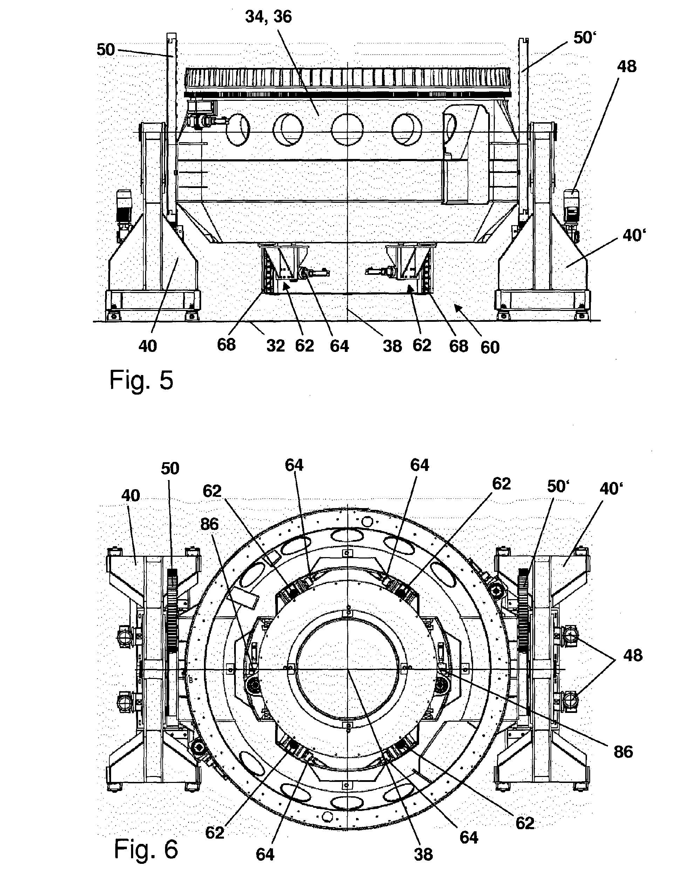

Entsprechend den Fig. 2 bis 9 sind die zwei Spanneinrichtungen 34, 36 zueinander konzentrisch um eine Längsachse 38 angeordnet. Mit anderen Worten fallen die beiden Längsachsen 38 der zwei Spanneinrichtungen 34, 36 miteinander und mit der Längsachse der Tragstruktur 30 sowie der Vorrichtung 10 insgesamt zusammen. Die zwei Spanneinrichtungen 34, 36 sind insoweit auf einer gemeinsamen Längsachse 38, welche auch mit der Längsachse der Tragstruktur 30 und der Vorrichtung 10 übereinstimmt, angeordnet, was sich insbesondere auch den Fig. 5 bis 8 entnehmen lässt.

Darüber hinaus sind die zwei Spanneinrichtungen 34, 36 auf der gemeinsamen Längsachse 38 zueinander in axialer Richtung relativ bewegbar. Ohne im Einzelnen dargestellt zu sein, kann die innere Spanneinrichtung 36 somit entlang der Längsachse 38 von der äußeren Spanneinrichtung 34 abgehoben und anschließend wieder in die äußere Spanneinrichtung 34 abgesenkt werden bzw. nach oben ausgefahren oder verfahren und anschließend wieder nach unten eingefahren oder verfahren werden. Auf diese Weise ist eine axiale Bewegung bzw. Verschiebung der zwei Spanneinrichtungen 34, 36 möglich, ohne dass es besonderer Anstrengungen bedürfte, die zwei Spanneinrichtungen bei oder auch nach einer solchen Bewegung bzw. Verschiebung zueinander ständig oder erneut ausrichten zu müssen.

Weiterhin sind die zwei Spanneinrichtungen derart ausgebildet, dass die zwei Bauteile 12 um die gemeinsame Längsachse 38 der zwei Spanneinrichtungen 34, 36 in Umfangsrichtung zueinander relativ verdrehbar sind. Konstruktive Einzelheiten zu diesem technischen Aspekt werden nachfolgend erläutert.

Wie die Fig. 2 und 5 bis 9 deutlich zeigen, ist die Längsachse 38 der zwei Spanneinrichtungen 34, 36 beim Einspannen und Ausrichten der zwei Bauteile 12 (nicht dargestellt) zueinander zu der Basis 32, beispielsweise einem Boden oder Fundament, auf bzw. an welcher die Tragstruktur 30 abgestützt ist, senkrecht oder im Wesentlichen senkrecht, d.h. nicht genau senkrecht, sondern davon geringfügig abweichend, verlaufend ausrichtbar. Demnach ist in den Fig. 2 und 5 bis 9 jeweils die Stellung der erfindungsgemäßen Vorrichtung 10 dargestellt, in welcher die Bauteile 12 "beladen", also aufgelegt, eingespannt, (fein)bearbeitet und zueinander ausgerichtet werden. Die Vorrichtung 10 nimmt quasi eine vertikal nach oben ("offene" bzw. "geöffnete") gerichtete Stellung ein. Sämtliche dieser Vorgänge erfolgen aufgrund der konzentrischen Anordnung um die Längsachse 38 kraft- und momentenfrei. Beaufschlagungen durch eigene Gewichtskräfte, die eben zu Querkräften und Momenten, wie beim Stand der Technik, führen, finden nicht statt. Im Gegenteil lassen sich mittels der erfindungsgemäßen Vorrichtung 10 sogar die eigenen Gewichtskräfte infolge der Erdanziehung zusätzlich zum/beim Einspannen und Ausrichten der Bauteile 12 ausnutzen. Im Ergebnis bringt die erfindungsgemäße Vorrichtung 10 gegenüber dem Stand der Technik eine Vielzahl, zudem herausragender Vorteile mit sich. Dies gilt insbesondere wieder im Hinblick auf eine besonders einfache, kompakte und zuverlässige Bauweise zum einen und auf eine ausgesprochen hohe Montage- bzw. Fertigungsgenauigkeit zum anderen.

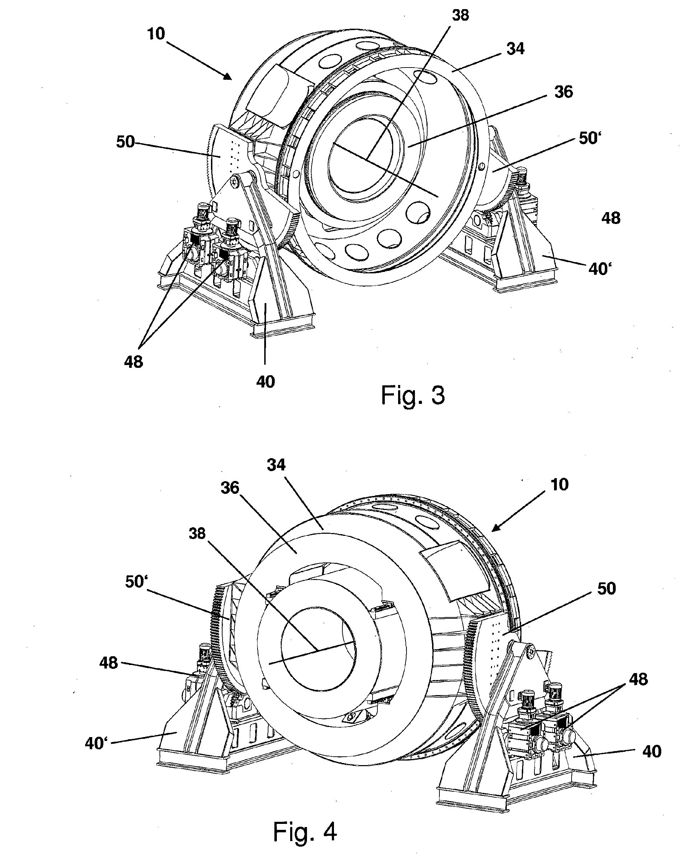

Wie die Fig. 3 und 4 darüber hinaus deutlich zeigen, ist die Längsachse 38 der zwei Spanneinrichtungen 34, 36 beim (Ver-) Schweißen von zwei Bauteilen 12 (ebenfalls nicht dargestellt) miteinander zu der Basis 32, beispielsweise dem Boden oder Fundament, auf bzw. an welcher die Tragstruktur 30 abgestützt ist, aus der senkrechten oder im Wesentlichen senkrechten Ausrichtung, wie noch zuvor, verdreht bzw. verschwenkt. Bei der dargestellten Ausführungsform der Fig. 3 und 4 ist die Längsachse 38 beispielsweise parallel oder im Wesentlichen parallel verlaufend ausrichtbar. Demnach ist in den Fig. 3 und 4 jeweils die Stellung der erfindungsgemäßen Vorrichtung 10 dargestellt, in welcher die Bauteile 12 miteinander ver- bzw. geschweißt werden. Die Vorrichtung 10 nimmt quasi eine etwa horizontal zur Seite gerichtete ("offene" bzw. "geöffnete") Stellung ein. Jede Schweißnaht kann auf diese Weise in der jeweils optimalen Lage erzeugt werden, d.h. die flüssige Schweißschmelze wird in optimaler Lage, nämlich in sogenannter Wannenlage zur Erdanziehung, erzeugt.

Ohne im Einzelnen gezeigt zu sein, kann die Längsachse 38 der zwei Spanneinrichtungen 34, 36 zum (Ver-)Schweißen der zwei Bauteile 12 in jede beliebige (andere) Stellung gedreht bzw. verschwenkt werden. Durch die Möglichkeit der beliebigen Drehung bzw. Verschwenkung der Vorrichtung 10 können die miteinander zu (ver-)schweißenden zwei Bauteile 12 individuell in die jeweils für sie optimale Lage gedreht bzw. verschwenkt werden, um die flüssige Schweißschmelze in sogenannter Wannenlage zur Erdanziehung zu erzeugen. Die Güte der Schweißnähte lässt sich damit erheblich verbessern, und zwar unabhängig von der Form und Abmessung der zwei Bauteile 12 und der zu erzielenden Schweißnähte selbst.

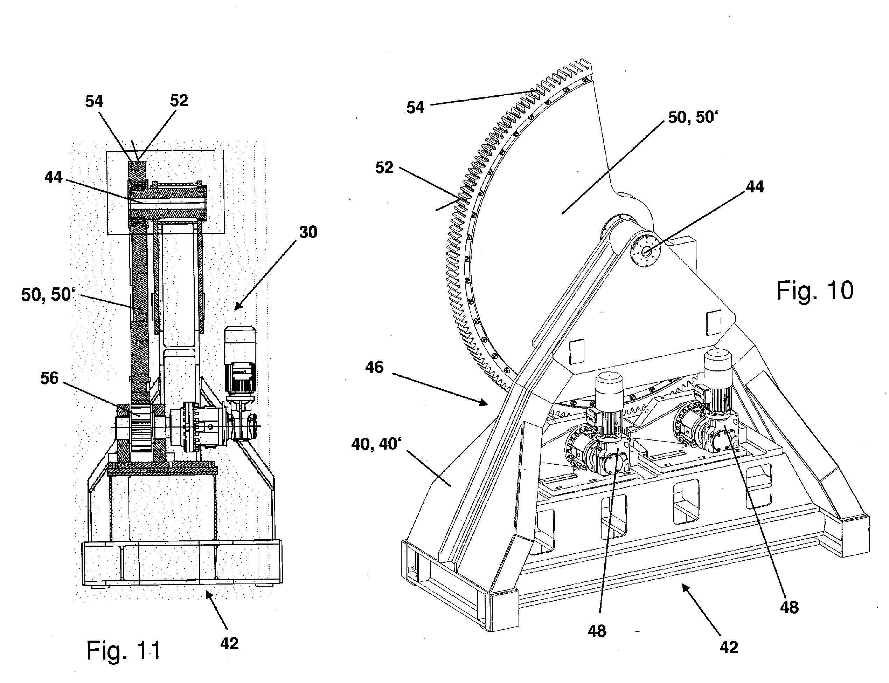

Wie die Fig. 2 bis 11 zeigen, umfasst die Tragstruktur 30 zwei Tragelemente 40, 40'. Die zwei Tragelemente 40, 40' stützen sich auf/an der Basis 32 oder dergleichen Fundament ab und sind auf/an der Basis 32 einander gegenüberliegend, zum Beispiel mittels Schrauben etc. (nicht dargestellt), in herkömmlicher Weise befestigbar. Entsprechend der Fig. 2 sind die zwei Spanneinrichtungen 34, 36 von der Tragstruktur 30 zwischen deren zwei Tragelementen 40, 40' mittig aufgenommen und gehalten.

Die Tragstruktur 30 weist, wie den Fig. 2 bis 11 weiter entnehmbar ist, eine Einrichtung 42 zum Drehen oder Verschwenken der zwei Spanneinrichtungen 34, 36 samt der Bauteile (nicht gezeigt) relativ zu der die Tragstruktur 30 abstützenden Basis 32 auf. Durch die Dreheinrichtung 42 ist es möglich, die Stellung der zwei Spanneinrichtungen 34, 36, beliebig auf die jeweils erforderlichen, vorzunehmenden Bearbeitungsvorgänge einzustellen und individuell zu verändern. Somit können die zwei Spanneinrichtungen 34, 36 aus einer Stellung, in welcher die Längsachse 38 senkrecht oder im Wesentlichen senkrecht ausgerichtet ist, in eine beliebig andere Stellung gedreht bzw. verschwenkt werden, um beispielsweise die miteinander zu verschweißenden Bauteile 12 im Bereich von deren Schweißnähten zunächst durch Fräsen vorzubereiten und sodann zum Verschweißen in die optimale Lage, die sogenannte Wannenlage, zu verbringen.

Die Dreh- oder Verschwenkeinrichtung 42 der Tragstruktur 30 ist mit einer Drehachse 44, beispielsweise in Form von einem Drehbolzen an jedem der beiden Tragelemente 40, 40', ausgestattet. Die Drehachse 44 ist daher zwischen der Tragstruktur 30 und den zwei Spanneinrichtungen 34, 36 angeordnet.

Zudem ist die Dreh- oder Verschwenkeinrichtung 42 der Tragstruktur 30 mit einer Antriebseinrichtung 46 versehen. Die Antriebseinrichtung 46 besteht aus wenigstens einem Antriebsmotor 48, der an der Tragstruktur 30 angeordnet ist, und mindestens einem Antriebselement 50, 50', das den zwei Spanneinrichtungen 34, 36 zugeordnet ist. Das mindestens eine Antriebselement 50, 50' wirkt mit dem Antriebsmotor 48 zusammen.

Bei der in den Fig. 2 bis 11 dargestellten Ausführungsform der Vorrichtung 10 sind vorzugsweise vier Antriebsmotoren 48 und zwei Antriebselemente 50, 50' vorgesehen. Insoweit sind zwei Antriebsmotoren 48 an dem Antriebselement 50 und zwei weitere Antriebsmotoren 48 an dem Antriebselement 50' angeordnet und, zum Beispiel durch Schrauben (nicht dargestellt), angebracht.

Die zwei Antriebselemente 50, 50' der Antriebseinrichtung 46, die jeweils mit den zwei Antriebsmotoren 48 zusammenwirken, sind segment- oder scheibenförmig ausgebildet und an deren Umfang 52 mit einer Profilierung 54, insbesondere einer Verzahnung, Zähnen oder einem Zahnradkranz, versehen. In die Profilierung 54 greift ein Antriebsrad 56 der Antriebsmotoren 48 ein. Bei der dargestellten Ausführungsform sind die Antriebselemente 50, 50' als Segmente ausgebildet, da eine Drehung bzw. Verschwenkung der zwei Spanneinrichtungen 34, 36 um einen Winkel von 360° nicht erforderlich ist. Für den Fall aber, dass eine Drehung bzw. Verschwenkung der zwei Spanneinrichtungen 34, 36 um einen Winkel von 360° realisiert werden müsste, kann das Antriebselement 50, 50' ohne weiteres scheibenförmig mit einer vollständig umlaufenden Profilierung 54 ausgebildet werden.

Insbesondere zurückkommend auf die Fig. 2 bis 4, sind die zwei Antriebselemente 50, 50' jeweils außenseitig an den zwei Spanneinrichtungen 34, 36 unlösbar befestigt. Wie die Fig. 2 bis 4 zeigen, sind die Antriebselemente 50, 50' jeweils an dem Außenumfang 58 der äußeren Spanneinrichtung 34 angeschweißt.

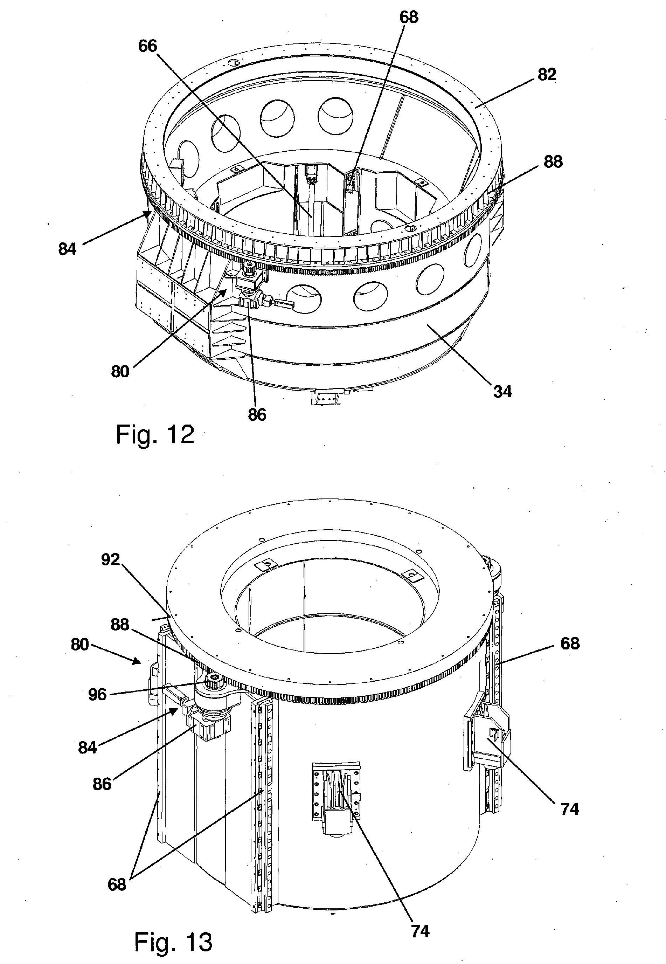

Wie eingangs erwähnt, sind die zwei Spanneinrichtungen 34, 36 auf der gemeinsamen Längsachse 38 zueinander in axialer Richtung relativ bewegbar bzw. verfahrbar. Zu diesem Zweck ist zwischen den zwei Spanneinrichtungen 34, 36 eine Hub- und Senkeinrichtung 60 vorgesehen, wie aus den Fig. 5, 6, 9 und 12 bis 16 hervorgeht.

Die Hub- und Senkeinrichtung 60 umfasst demnach wenigstens eine Hub- und Senkantriebseinrichtung 62.

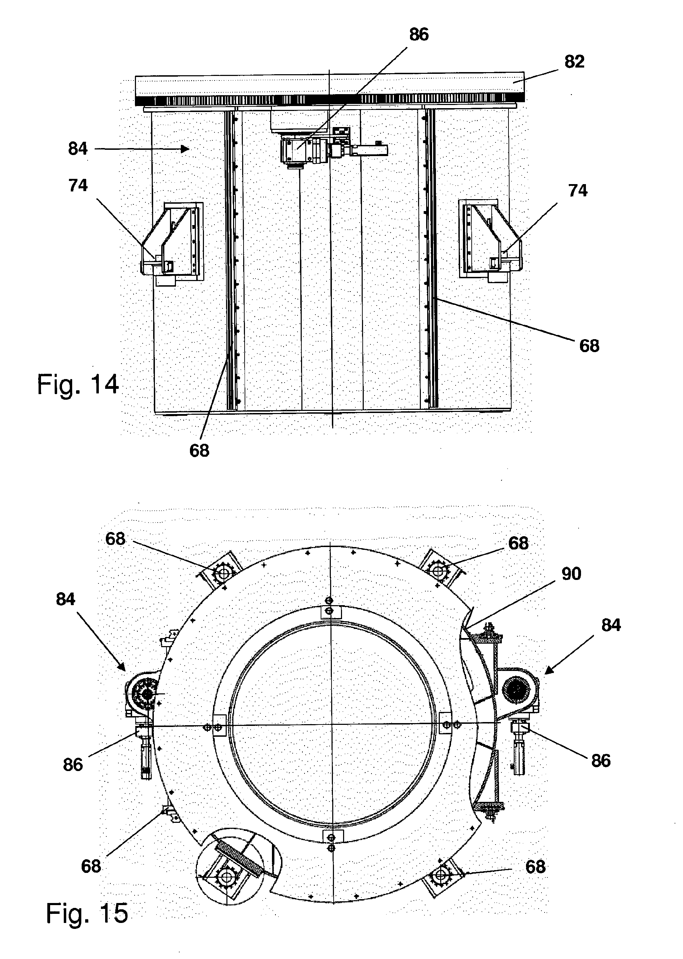

Bei der Ausführungsform der Vorrichtung 10 sind entsprechend den Fig. 5, 6, 9 und 12 bis 16 vorzugsweise vier Hub- und Senkantriebseinrichtungen 62 vorgesehen. Wie insbesondere aus den Fig. 6 und 15 hervorgeht, sind die vier Hub- und Senkantriebseinrichtungen 62 der Hub- und Senkeinrichtung 60 jeweils zueinander, vorzugsweise auf einem gemeinsamen Umfang, etwa gleich beabstandet. Vorliegend sind die vier Hub- und Senkantriebseinrichtungen 62 jeweils zueinander in einer Teilung von 90° über den Umfang angeordnet. Auf diese Weise ist ein ruhige und vor allem kippstabile axiale Bewegung der zwei Spanneinrichtungen 34, 36 relativ zueinander ermöglicht.

Die vier Hub- und Senkantriebseinrichtungen 62 der Hub- und Senkeinrichtung 60 sind jeweils mit einem Antriebsmotor 64, der an einer der zwei Spanneinrichtungen 34, 36, vorzugsweise an der inneren Spanneinrichtung 36, angeordnet ist, und einem Tragelement 66 sowie gegebenenfalls einem Führungselement 68, welches endseitig von der anderen der zwei Spanneinrichtungen 34, 36, vorzugsweise von der äußeren Spanneinrichtung 34, drehfest aufgenommen ist, versehen. Ohne im Einzelnen dargestellt zu sein, ist eine kinematische Umkehr dessen jederzeit möglich.

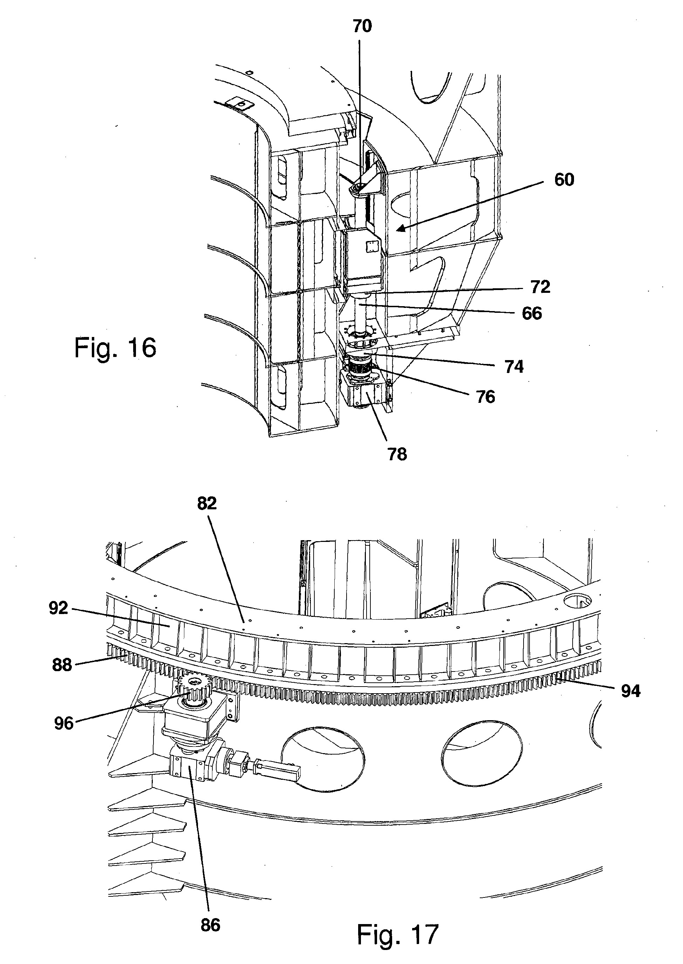

In der Fig. 16 ist die Hub- und Senkantriebseinrichtung 62 der Hub- und Senkeinrichtung 60 mit dem Tragelement 66, jedoch ohne das Führungselement 68 im Aufbau gezeigt. Demnach ist das Tragelement 66 bevorzugt in Form einer Gewindespindel, insbesondere als selbsthemmende Gewindespindel, vorzugsweise als Trapezgewindespindel oder Planeten-Rollenspindel, ausgebildet. Das Tragelement 66 ist in einem oberen Lager 70 und in einem unteren Lager 72 gehalten. Das Tragelement 66 steht mit der Spindelmutter 74 in Wirkeingriff. Am unteren Ende des Tragelementes 66 sind eine Servo-Kupplung 76 und ein Servo-Getriebemotor 78 angeordnet, die das Tragelement 66 beaufschlagen.

Die zwei Spanneinrichtungen 34, 36 umfassen weiter jeweils eine Dreheinrichtung 80 zur relativen Verdrehung der zwei Bauteile 12 um die gemeinsame Längsachse 38 der zwei Spanneinrichtungen 34, 36 zueinander in Umfangsrichtung im Gleich und/oder Gegenlauf. Die Dreheinrichtungen 80 der zwei Spanneinrichtungen 34, 36 sind bei der vorliegenden Ausführung der erfindungsgemäßen Vorrichtung 10 in gleicher Bauweise gehalten. Ohne im Einzelnen dargestellt zu sein, ist es möglich, die Dreheinrichtungen 80 der zwei Spanneinrichtungen 34, 36 davon abweichend unterschiedlich auszugestalten.

Dabei umfassen die Dreheinrichtungen 80 der zwei Spanneinrichtungen 34, 36 jeweils ein etwa ringförmig ausgebildetes Tragelement 82 oder dergleichen Drehring zum Aufnehmen, Einspannen und Ausrichten der Bauteile 12 zueinander. Das Tragelement 82 ist jeweils relativ gegenüber den zwei entsprechenden Spanneinrichtungen 34, 36 drehbar ausgebildet, beispielsweise mittels eines Lagers (nicht dargestellt).

Darüber hinaus weisen die Dreheinrichtungen 80 der zwei Spanneinrichtungen 34, 36 jeweils eine Antriebseinrichtung 84 auf. Die Antriebseinrichtung umfasst wenigstens einen Antriebsmotor 86, der an der jeweiligen Spanneinrichtung 34 bzw. 36 angeordnet ist, und ein Antriebselement 88. Das Antriebselement 88 steht in Wirkeingriff mit dem wenigstens einen Antriebsmotor 86 und ist dem etwa ringförmig ausgebildeten Tragelement 82 der jeweiligen Spanneinrichtung 34 bzw. 36 zugeordnet.

Entsprechend den Fig. 6 und 15 sind bei der gezeigten Ausführungsform der Vorrichtung 10 vorzugsweise jeweils zwei Antriebsmotoren 86 bei der Antriebseinrichtung 84 der zwei Spanneinrichtungen 34, 36 vorgesehen.

Wie insbesondere aus den Fig. 6 und 15 hervorgeht, sind die zwei Antriebsmotoren 86 jeweils zueinander, vorzugsweise auf einem gemeinsamen Umfang, etwa gleich beabstandet. Vorliegend sind die zwei Antriebsmotoren 86 jeweils zueinander in einer Teilung von 182° über den Umfang angeordnet. Auf diese Weise ist ein ruhige und vor allem kippstabile axiale Bewegung der zwei Spanneinrichtungen 34, 36 relativ zueinander ermöglicht. Auch hierdurch wird eine gleichmäßige Kraftübertragung erhalten. Durch eine solche Teilung heben sich auftretende Kräfte gegenseitig auf, wodurch wiederum Eigenschwingungen vermieden werden. Zudem kann die Genauigkeit noch weiter erhöht werden, in dem die zwei Antriebsmotoren beispielsweise mit (geringfügig) unterschiedlicher Geschwindigkeit betrieben werden. Hierdurch wird eine Vorspannung erzeugt. Ein möglicherweise zwischen den zwei Bauteilen 12 vorhandenes Spiel wird aufgehoben.

Die zwei Antriebsmotoren 86 der Antriebseinrichtung 84 der Dreheinrichtung 80 sind jeweils an dem Außenumfang 58 der äußeren Spanneinrichtung 34 bzw. an dem Außenumfang 90 der inneren Spanneinrichtung 36, etwa mittels Schrauben (nicht weiter dargestellt), befestigt.

Demgegenüber ist das eine Antriebselement 88 der Antriebseinrichtung 84 der Dreheinrichtung 80 außenseitig an dem etwa ringförmig ausgebildeten Tragelement 82 der jeweiligen Spanneinrichtung 34, 36 unlösbar befestigt (nicht im Einzelnen dargestellt). Das Antriebselement 88 ist an dessen Umfang 92 mit einer Profilierung 94, insbesondere einer Verzahnung, Zähnen oder einem Zahnkranz, versehen. In die Profilierung 94 greift, wie in vergrößerter Darstellung aus der Fig. 17 entnehmbar ist, ein Antriebsrad 96 der Antriebsmotoren 86 ein.

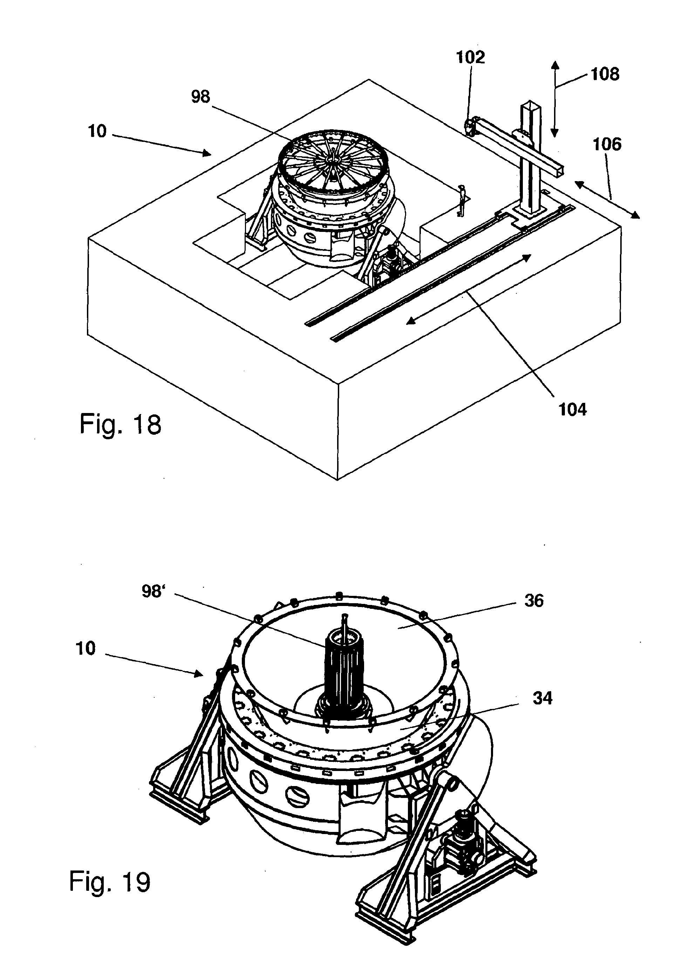

Wie darüber hinaus aus den Fig. 18 und 19 ersichtlich ist, ist der inneren Spanneinrichtung 36 bei der Ausführungsform erfindungsgemäßen Vorrichtung 10 zusätzlich ein Spannelement 98 (im ausgefahrenen Zustand) und 98' (im eingefahrenen Zustand) zugeordnet. Das Spannelement 98, 98' ist an dem etwa ringförmig ausgebildeten Tragelement 82 oder Drehring der jeweiligen Spanneinrichtung 36 lösbar befestigbar. Durch das Spannelement 98, 98' ist das jeweilige Bauteil 12 an dem etwa ringförmig ausgebildeten Tragelement 82 einspannbar und festlegbar. Das Spannelement 98, 98' kann dabei als Spannsystem mit mindestens einem Keilspannelement (nicht gezeigt) und/oder wenigstens einem Schlauchspannelement (ebenfalls nicht gezeigt), Spannkreuz oder Spannspinne ausgebildet sein. Durch das Spannelement 98, 98' werden die zu verschweißenden Bauteile 12 an deren Fügestelle unterstützt, um eine optimale Rundheit der zu verschweißenden Bauteile 12 zu erreichen bzw. um ein Eindrücken der dünnen Wandung und einen gegebenenfalls auftretenden Verzug der Wandung durch den Schweißprozess zu verhindern.

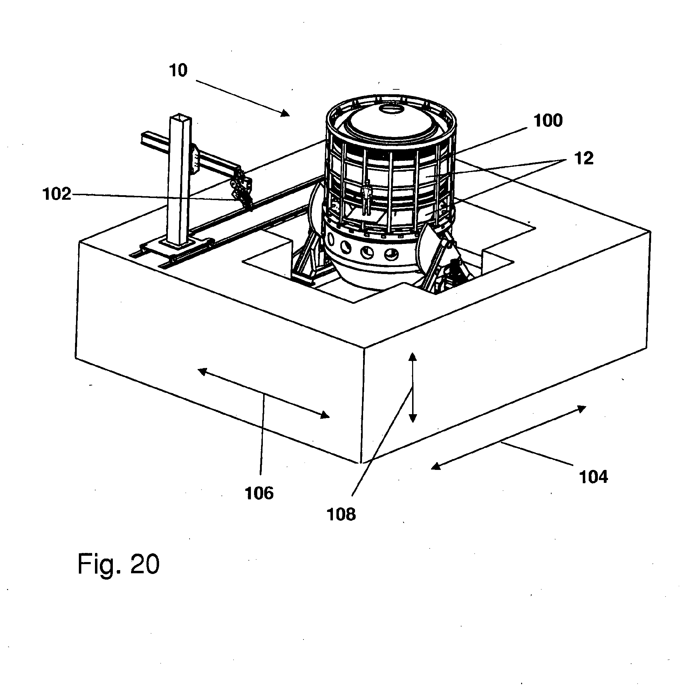

Alternativ oder kumulativ zu Spannelement 98, 98' kann entsprechend der Ausführungsform der in der Fig. 20 beispielhaft dargestellten erfindungsgemäßen Vorrichtung 10 der äußeren Spanneinrichtung 34 weiterhin ein Spannelement 100 zugeordnet sein, das zum Beispiel starr, etwa als Spannkorb oder dergleichen Spannelement, ausgebildet ist. Das Spannelement 100 dient einer zusätzlich verbesserten Positionierung und/oder Fixierung der zu verschweißenden Bauteile 12 an deren Fügestelle.

Aus den Fig. 18 und 20 geht schließlich noch hervor, dass der Tragstruktur 30 und den zwei Spanneinrichtungen 34, 36 eine Einrichtung 102 zur Bearbeitung mindestens eines Teils des/der zwei segmentartig ausgebildeten, dünnwandigen und hohlprofilierten Bauteile/s 12 zugeordnet ist. Die Bearbeitungseinrichtung 102 kann in diesem Zusammenhang als Schweiß-, Löt- oder Klebeeinrichtung bzw. Schneideeinrichtung bzw. Schleif-, Fräs-, Dreh- oder dergleichen flächen- und spanbearbeitende sowie güte- und materialprüfende Einrichtung ausgebildet sein. Die Bearbeitungseinrichtung 102 ist gegenüber der Tragstruktur 30 und den zwei Spanneinrichtungen 34, 36 der Vorrichtung 10 nach der Erfindung relativ entsprechend den Doppelpfeilen 104, 106, 108 hin- und wegbewegbar bzw. hin- und wegverfahrbar, und zwar in sowohl axialer als auch vertikaler, nämlich x-, y- und z- Richtung, so dass jede nur erdenkliche Position gegenüber dem/den zu bearbeitenden Bauteilen 12 eingenommen und angefahren sowie erreicht werden kann.

## Patentansprüche

1. Vorrichtung zum Einspannen und Ausrichten von segmentartig ausgebildeten, dünnwandigen und hohlprofilierten Bauteilen (12), umfassend eine auf/an einer Basis (32) abgestützte Tragstruktur (30) oder dergleichen Rahmengestell und zwei von der Tragstruktur (30) gemeinsam aufgenommene und gehaltene Einrichtungen (34, 36) zum Einspannen von zwei segmentartig ausgebildeten, dünnwandigen und hohlprofilierten Bauteilen (12), wobei die zwei Spanneinrichtungen (34, 36) auf einer gemeinsamen Längsachse (38) angeordnet und auf der gemeinsamen Längsachse (38) zueinander in axialer Richtung relativ bewegbar sind, wobei die zwei Spanneinrichtungen (34, 36) derart ausgebildet sind, dass die zwei Bauteile (12) um die gemeinsame Längsachse (38) der zwei Spanneinrichtungen (34, 36) in Umfangsrichtung zueinander relativ verdrehbar sind, und wobei die Längsachse (38) der zwei Spanneinrichtungen (34, 36) beim Einspannen und Ausrichten der zwei Bauteile (12) zueinander zu der die Tragstruktur (30) abstützenden Basis (32) senkrecht verlaufend ausrichtbar ist.

2. Vorrichtung nach Anspruch 1, **dadurch gekennzeichnet, dass** die Tragstruktur (30) zwei sich auf/an der Basis (32) abstützende und an der Basis (32) einander gegenüberliegend befestigbare Tragelemente (40, 40') umfasst, zwischen denen die zwei Spanneinrichtungen (34, 36) aufgenommen und gehalten sind.

3. Vorrichtung nach Anspruch 1 oder 2, **dadurch gekennzeichnet, dass** die Tragstruktur (30) eine Einrichtung (42) zum Drehen oder Verschwenken der zwei Spanneinrichtungen (34, 36) relativ zu der die Tragstruktur (30) abstützenden Basis (32) umfasst.

4. Vorrichtung nach einem der Ansprüche 1 bis 3, **dadurch gekennzeichnet, dass** die Dreh- oder Verschwenkeinrichtung (42) der Tragstruktur (30) eine Drehachse (44), die zwischen der Tragstruktur (30) und den zwei Spanneinrichtungen (34, 36) angeordnet ist, umfasst.

5. Vorrichtung nach einem der Ansprüche 1 bis 4, **dadurch gekennzeichnet, dass** die Dreh- oder Verschwenkeinrichtung (42) der Tragstruktur (30) eine Antriebseinrichtung (46) mit wenigstens einem, insbesondere vier, Antriebsmotor/en (48), der/die an der Tragstruktur (30) angeordnet ist/sind, und mindestens einem, insbesondere zwei, mit dem/den Antriebsmotor/en (48) zusammenwirkenden Antriebselement/en (50, 50'), das/die den zwei Spanneinrichtungen (34, 36) zugeordnet ist/sind, umfasst.

6. Vorrichtung nach 5, **dadurch gekennzeichnet, dass** das mindestens eine mit dem wenigstens einen Antriebsmotor (48) zusammenwirkende Antriebselement (50, 50') der Antriebseinrichtung (46) segment- oder scheibenförmig ausgebildet und an dessen/deren Umfang (52) mit einer Profilierung (54), insbesondere einer Verzahnung, Zähnen oder einem Zahnradkranz, versehen ist.

7. Vorrichtung nach einem der Ansprüche 1 bis 6, **dadurch gekennzeichnet, dass** das wenigstens eine Antriebselement (50, 50') außenseitig an den zwei Spanneinrichtungen (34, 36) unlösbar befestigt ist.

8. Vorrichtung nach einem der Ansprüche 1 bis 7, **dadurch gekennzeichnet, dass** die zwei Spanneinrichtungen (34, 36) aus einer äußeren oder außen liegenden Spanneinrichtung (34) und einer von der äußeren oder außen liegenden Spanneinrichtung (34) umgebenden inneren oder innen liegenden Spanneinrichtung (36) gebildet sind.

9. Vorrichtung nach einem der Ansprüche 1 bis 8, **dadurch gekennzeichnet, dass** zwischen den zwei Spanneinrichtungen (34, 36) eine Hub- und Senkeinrichtung (60) zur relativen Bewegung der zwei Spanneinrichtungen (34, 36) auf der gemeinsamen Längsachse (38) zueinander in axialer Richtung angeordnet ist.

10. Vorrichtung nach einem der Ansprüche 1 bis 9, **dadurch gekennzeichnet, dass** die Hub- und Senkeinrichtung (60) wenigstens eine, insbesondere die vier, Hub- und Senkantriebseinrichtung/en (62) umfasst, die insbesondere jeweils mit einem Antriebsmotor (64), der an einer, vorzugsweise an der inneren, der zwei Spanneinrichtungen (34, 36) angeordnet ist, und einem Tragelement (66) sowie gegebenenfalls einem Führungselement (68), welches endseitig von einer, vorzugsweise von der äußeren, der zwei Spanneinrichtungen (34, 36) drehfest aufgenommen ist, versehen ist/sind.

11. Vorrichtung nach Anspruch 10, **dadurch gekennzeichnet, dass** die wenigstens eine, insbesondere die vier, Hub- und Senkantriebseinrichtung/en (62) der Hub- und Senkeinrichtung (60) jeweils zueinander, vorzugsweise auf einem gemeinsamen Umfang, etwa gleich beabstandet ist/sind.

12. Vorrichtung nach Anspruch 10 oder 11, **dadurch gekennzeichnet, dass** das wenigstens eine, insbesondere die vier, Tragelement/e (68) in Form einer Gewindespindel, insbesondere als selbsthemmende Gewindespindel, vorzugsweise als Trapezgewindespindel oder Planeten-Rollenspindel, ausgebildet ist/sind.

13. Vorrichtung nach einem der Ansprüche 1 bis 12, **dadurch gekennzeichnet, dass** die zwei Spanneinrichtungen (34, 36) jeweils eine Dreheinrichtung (78) zur relativen Verdrehung der zwei Bauteile (12) um die gemeinsame Längsachse (38) der zwei Spanneinrichtungen (34, 36) zueinander in Umfangsrichtung umfassen.

14. Vorrichtung nach einem der Ansprüche 1 bis 13, **dadurch gekennzeichnet, dass** die Dreheinrichtung (78) der zwei Spanneinrichtungen (34, 36) jeweils ein etwa ringförmig ausgebildetes Tragelement (80) zum Aufnehmen, Einspannen und Ausrichten der Bauteile (12) zueinander umfasst.

15. Vorrichtung nach einem der Ansprüche 1 bis 14, **dadurch gekennzeichnet, dass** die Dreheinrichtung (78) der zwei Spanneinrichtungen (34, 36) jeweils eine Antriebseinrichtung (82) mit wenigstens einem, insbesondere zwei, Antriebsmotor/en (84), der/die an der jeweiligen Spanneinrichtung (34, 36) angeordnet ist/sind, und einem mit dem/den Antriebsmotor/en (84) zusammenwirkenden Antriebselement (86), das dem etwa ringförmig ausgebildeten Tragelement (80) der jeweiligen Spanneinrichtung (34, 36) zugeordnet ist, umfasst.

16. Vorrichtung nach 15, **dadurch gekennzeichnet, dass** das mit dem wenigstens einen, insbesondere den zwei, Antriebsmotor/en (84) zusammenwirkende Antriebselement (86) der Antriebseinrichtung (82) der Dreheinrichtung (78) an dessen Umfang (90) mit einer Profilierung (92), insbesondere einer Verzahnung, Zähnen oder einem Zahnkranz, versehen ist.

17. Vorrichtung nach einem der Ansprüche 1 bis 16, **dadurch gekennzeichnet, dass** das Antriebselement (86) der Antriebseinrichtung (82) der Dreheinrichtung (78) außenseitig an dem etwa ringförmig ausgebildeten Tragelement (80) der jeweiligen Spanneinrichtung (34, 36) unlösbar befestigt ist.

18. Vorrichtung nach einem der Ansprüche 15 bis 17, **dadurch gekennzeichnet, dass** der wenigstens eine, insbesondere die zwei, an der jeweiligen Spanneinrichtung (34, 36) angeordnete/n Antriebsmotor/en (84) der Antriebseinrichtung (82) der Dreheinrichtung (78) jeweils zueinander, vorzugsweise auf einem gemeinsamen Umfang, etwa gleich beabstandet ist/sind.

19. Vorrichtung nach einem der Ansprüche 1 bis 18, **dadurch gekennzeichnet, dass** die zwei Spanneinrichtungen (34, 36) jeweils ein an dem etwa ringförmig ausgebildeten Tragelement (80) der jeweiligen Spanneinrichtung (34, 36) lösbar befestigbares Spannelement (96, 96', 96"), durch welches das jeweilige Bauteil (12) an dem etwa ringförmig ausgebildeten Tragelement (80) der jeweiligen Spanneinrichtung (34, 36) einspannbar und festlegbar ist, umfassen.

20. Vorrichtung nach Anspruch 19, **dadurch gekennzeichnet, dass** das Spannelement (96, 96', 96") als Spannsystem mit mindestens einem Keilspannelement und/oder wenigstens einem Schlauchspannelement, Spannkorb, Spannkreuz oder Spannspinne ausgebildet ist.

21. Vorrichtung nach Anspruch 20, **dadurch gekennzeichnet, dass** das Spannelement starr (96) und/oder auf- und einklappbar (96') und/oder ausbreit- und zusammenlegbar (96') und/oder aus einer Kombination daraus (96") ausgebildet ist.

22. Vorrichtung nach einem der Ansprüche 1 bis 21, **dadurch gekennzeichnet, dass** den zwei Spanneinrichtungen (34, 36) eine Einrichtung (98) zur Bearbeitung mindestens eines Teils des/der zwei segmentartig ausgebildeten, dünnwandigen und hohlprofilierten Bauteile/s (12) zugeordnet ist.

23. Vorrichtung nach Anspruch 22, **dadurch gekennzeichnet, dass** die Einrichtung (98) zur Bearbeitung des mindestens einen Teils des/der zwei segmentartig ausgebildeten, dünnwandigen und hohlprofilierten Bauteile/s (12) als Schweiß-, Löt- oder Klebeeinrichtung bzw. Schneideeinrichtung bzw. Schleif, Fräs-, Dreh- oder dergleichen flächen- und spanbearbeitende sowie güte- und materialprüfende Einrichtung ausgebildet ist.

24. Verwendung einer Vorrichtung nach einem der vorhergehenden Ansprüche zum Einspannen, insbesondere spannungsfreien Einspannen, zur Montage von segmentartig ausgebildeten, dünnwandigen und hohlzylindrischen Bauteilen (12) und Behältern, Domen sowie Boostergehäusen von Raketen oder ähnlichen hohlzylindrischen Geräten großer Abmessungen.

25. Verwendung einer Vorrichtung nach einem der vorhergehenden Ansprüche zum Bearbeiten, insbesondere zum Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen (12) und Behältern, Domen sowie Boostergehäusen oder ähnlichen hohlzylindrischen Geräten großer Abmessungen.

26. Verwendung der Vorrichtung nach einem der vorhergehenden Ansprüche zum Herstellen von rotationssymmetrischen und/ oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen (12).

27. Verwendung der Vorrichtung nach einem der vorhergehenden Ansprüche zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

## Claims

1. Device for mounting and aligning segmented, thin-walled and hollow-profiled components (12), comprising a support structure (30) supported on a base (32) or similar framework and two units (34, 36) received and held together by the support structure (30) for mounting two segmented, thin-walled and hollow-profiled components (12), wherein the two mounting units (34, 36) are arranged on a common longitudinal axis (38) and are movable toward one another in the axial direction on the common longitudinal axis (38), wherein the two mounting units (34, 36) are designed such that the two components (12) can be rotated relative to one another about the common longitudinal axis (38) of the two mounting units (34, 36) in the circumferential direction, and wherein the longitudinal axis (38) of the two mounting units (34, 36) can be aligned running perpendicularly to the base (32) supporting the support structure (30) when mounting and aligning the two components (12) to one another.

2. Device according to claim 1, **characterized in that** the support structure (30) comprises two support elements (40, 40') supported on the base (32) and which can be attached on the base (32) opposite each other, between which the two mounting units (34, 36) are received and held.

3. Device according to claim 1 or 2, **characterized in that** the support structure (30) comprises a unit (42) for rotating or traversing the two mounting units (34, 36) relative to the base (32) supporting the support structure (30).

4. Device according to one of claims 1 to 3, **characterized in that** the rotating or traversing unit (42) of the support structure (30) comprises a rotation axis (44) that is arranged between the support structure (30) and the two mounting units (34, 36).

5. Device according to one of claims 1 to 4, **characterized in that** the rotating or traversing unit (42) of the support structure (30) comprises a driving unit (46) with at least one, in particular four, driving motor(s) (48) that is/are arranged on the support structure (30), and at least one, in particular two, driving elements (50, 50') interacting with the driving motor(s) (48) that is/are assigned to the two mounting units (34, 36).

6. Device according to 5, **characterized in that** the at least one driving element (50, 50') of the driving unit (46) interacting with the at least one driving motor (48) is designed in a segment-shaped or disk-shaped form and equipped around its circumference (52) with a profile (54), in particular a gearing, teeth or a gear rim.

7. Device according to one of claims 1 to 6, **characterized in that** the at least one driving element (50, 50') is attached inseparably on the outer side to the two mounting units (34, 36).

8. Device according to one of claims 1 to 7, **characterized in that** the two mounting units (34, 36) are formed of an outer or outside-located mounting unit (34) and of an inner or inside-located mounting unit (36) that is surrounded by the outer or outside-located mounting unit (34).

9. Device according to one of claims 1 to 8, **characterized in that** a lifting and lowering unit (60) is arranged between the two mounting units (34, 36) to allow a relative movement of the two mounting units (34, 36) toward one another along the common longitudinal axis (38) in axial direction.

10. Device according to one of claims 1 to 9, **characterized in that** the lifting and lowering unit (60) comprises at least one, in particular the four, lifting and lowering driving unit(s) (62) that is/are equipped in particular with one driving motor (64) each, which is arranged on one, preferably on the inner, of the two mounting units (34, 36), and one support element (66) as well as, if applicable, one guiding element (68) which at the end is received by one, preferably by the outer, of the two mounting units (34, 36) preventing any rotation.

11. Device according to claim 10, **characterized in that** the at least one, in particular the four, lifting and lowering driving unit(s) (62) of the lifting and lowering unit (60) is/are each spaced at approximately the same distance toward each other, preferably on a common circumference.

12. Device according to claim 10 or 11, **characterized in that** the at least one, in particular the four, support element (s) (68) is/are designed in the form of a lead screw, in particular as a self-locking lead screw, preferably as trapezoidal lead screw or planetary roller screw.

13. Device according to one of claims 1 to 12, **characterized in that** the two mounting units (34, 36) each comprise a rotating unit (78) to allow a relative rotation of the two components (12) toward one another along the common longitudinal axis (38) of the two mounting units (34, 36) in circumferential direction.

14. Device according to one of claims 1 to 13, **characterized in that** the rotating unit (78) of the two mounting units (34, 36) each comprises an approximately ring-shaped support element (80) for receiving, mounting and aligning the components (12) toward one another.

15. Device according to one of claims 1 to 14, **characterized in that** the rotating unit (78) of the two mounting units (34, 36) each comprises a driving unit (82) with at least one, in particular two, driving motor(s) (84) that is/are arranged on the applicable mounting unit (34, 36), and a driving element (86) interacting with the driving motor(s) (84) that is assigned to the approximately ring-shaped support element (80) of the applicable mounting unit (34, 36).

16. Device according to 15, **characterized in that** the driving element (86) of the driving unit (82) of the rotating unit (78) interacting with the at least one, preferably the two, driving motor(s) (84) is equipped around its circumference (90) with a profile (92), in particular a gearing, teeth or a gear rim.

17. Device according to one of claims 1 to 16, **characterized in that** the driving element (86) of the driving unit (82) of the rotating unit (78) is attached inseparably on the outer side to the approximately ring-shaped support element (80) of the applicable mounting unit (34, 36).

18. Device according to one of claims 15 to 17, **characterized in that** the at least one, in particular the two, driving motor(s) (84) of the driving unit (82) of the rotating unit (78) being arranged on the applicable mounting unit (34, 36) is/are each spaced at approximately the same distance toward each other, preferably on a common circumference.

19. Device according to one of claims 1 to 18, **characterized in that** the two mounting units (34, 36) each comprise a separably attachable mounting element (96, 96', 96'') on the approximately ring-shaped support element (80) of the applicable mounting unit (34, 36) by means of which the applicable component (12) can be mounted and fixed on the approximately ring-shaped support element (80) of the applicable mounting unit (34, 36).

20. Device according to claim 19, **characterized in that** the mounting element (96, 96', 96") is designed as a clamping system with at least one wedge clamping element and/or at least one hose clamping element, clamping basket, clamping cross or clamping spider.

21. Device according to claim 20, **characterized in that** the mounting element is designed as rigid means (96) and/or as unfolding and folding means (96') and/or extendible and collapsible means (96') and/or as any combination of the above (96").

22. Device according to one of claims 1 to 21, **characterized in that** the two mounting units (34, 36) are assigned to a unit (98) for processing at least one part of the two segmented, thin-walled and hollow-profiled component(s) (12).

23. Device according to claim 22, **characterized in that** the unit (98) for processing the at least one part of the two segmented, thin-walled and hollow-profiled component(s) (12) is designed as a welding, soldering or gluing unit and/or cutting and/or grinding, milling, turning or similar machining as well as quality and material-checking unit.

24. Use of a device according to any of the above claims for mounting, in particular tension-free mounting, for the assembly of segmented, thin-walled and hollow cylindrical components (12) and containers, domes as well as booster cases of rockets or similar hollow cylindrical devices of large dimensions.

25. Use of a device according to any of the above claims for processing, in particular welding, soldering or gluing and/or cutting and/or grinding, milling, turning or similar machining, of segmented, thin-walled and hollow cylindrical components (12) and containers, domes as well as booster cases or similar hollow cylindrical devices of large dimensions.

26. Use of the device according to one of the afore claims to manufacture rotationally symmetric and/or not rotationally symmetric shell-shaped components (12), particularly hemispherical, spherical-shaped, dome-shaped, ellipsoidspherical shaped, cone-shaped or ellipsoid components or components in Cassini-form, semi-torus form or other similar cross-sectional shapes.

27. Use of the device according to one of the afore claims to manufacture domes for rocket fuel tanks, satellite tanks, parabolic antennas, parabolic reflector shells, parabolic solar collectors, headlamp housings, container floors, tower cupolas, pressure domes or similar.

## Revendications

1. Dispositif pour brider et orienter des composants réalisés analogues à des segments, à parois minces et en forme de profilé creux (12), comprenant une structure portante (30) supporté sur/contre une base (32) ou un châssis similaire, et deux systèmes (34, 36) reçus et maintenus conjointement par la structure porteuse (30), destinés à brider deux composants réalisés analogues à des segments, à parois minces et en forme de profilé creux (12), dans lequel les deux systèmes de bridage (34, 36) sont agencés sur un axe longitudinal commun (38) et sont déplaçables l'un par rapport à l'autre en direction axiale le long de l'axe longitudinal commun (38), dans lequel les deux systèmes de bridage (34, 36) sont réalisés de telle manière que les deux composants (12) sont capables d'être tournés l'un par rapport à l'autre en direction périphérique autour de l'axe longitudinal commun (38) des deux systèmes de bridage (34, 36), et dans lequel l'axe longitudinal (38) des deux systèmes de bridage (34, 36) est susceptible d'être orienté de manière à s'étendre perpendiculairement à la base (32) qui soutient la structure porteuse (30) lors du bridage et de l'orientation des deux composants (12) l'un vers l'autre.

2. Dispositif selon la revendication 1, **caractérisé en ce que** la structure porteuse (30) comprend deux éléments porteurs (40, 40') supportés sur/contre la base (32) et susceptibles d'être fixés sur la base (32) à l'opposé l'un de l'autre, entre lesquels les deux systèmes de bridage (34, 36) sont reçus et maintenus.

3. Dispositif selon la revendication 1 ou 2, **caractérisé en ce que** la structure porteuse (30) comprend un moyen (42) pour faire tourner ou pivoter les deux systèmes de bridage (34, 36) par rapport à la base (32) qui supporte la structure porteuse (30).

4. Dispositif selon l'une des revendications 1 à 3, **caractérisé en ce que** le moyen pour faire tourner ou pivoter (42) la structure porteuse (30) comporte un axe de rotation (44) qui est agencé entre la structure porteuse (30) et les deux systèmes de bridage (34, 36).

5. Dispositif selon l'une des revendications 1 à 4, **caractérisé en ce que** le moyen pour faire tourner ou pivoter (42) la structure porteuse (30) comprend un moyen d'entraînement (46) avec au moins un, et en particulier quatre, moteur(s) d'entraînement (48) qui est/sont agencé(s) sur la structure porteuse (30), et au moins un, en particulier deux, élément(s) d'entraînement (50, 50') qui coopère(nt) avec le/les moteur(s) d'entraînement (48) et qui est/sont agencé(s) entre les deux systèmes de bridage (34, 36).

6. Dispositif selon la revendication 5, **caractérisé en ce que** ledit au moins un élément d'entraînement (50, 50') qui coopère avec ledit au moins un moteur d'entraînement (48), du moyen d'entraînement (46) est réalisé en forme de segment ou en forme de disque, et est/sont pourvu(s) à sa/leur périphérie (52) d'un profilage (54), en particulier d'une denture, de dents ou d'une couronne dentée.

7. Dispositif selon l'une des revendications 1 à 6, **caractérisé en ce que** ledit au moins un élément d'entraînement (50, 50') est fixé du côté extérieur sur les deux systèmes de bridage (34, 36) de manière indétachable.

8. Dispositif selon l'une des revendications 1 à 7, **caractérisé en ce que** les deux systèmes de bridage (34, 36) sont formés par un système de bridage (34) extérieur ou situé à l'extérieur, et par un système de bridage (36) intérieur ou situé à l'intérieur, entouré par le système de bridage (34) extérieur ou situé à l'extérieur.

9. Dispositif selon l'une des revendications 1 à 8, **caractérisé en ce qu'**un système de levage/abaissement (60) destiné à déplacer relativement les deux systèmes de bridage (34, 36) en direction axiale l'un par rapport à l'autre sur l'axe longitudinal commun (38) est agencé entre les deux systèmes de bridage (34, 36).

10. Dispositif selon l'une des revendications 1 à 9, **caractérisé en ce que** le système de levage/abaissement (60) comprend au moins un, et en particulier quatre, moyen(s) de levage/abaissement (62), qui est/sont pourvu(s) en particulier chacun d'un moteur d'entraînement (64) qui est agencé sur l'un des deux systèmes de bridage (34, 36), de préférence sur le système de bridage intérieur, et un élément porteur (66) ainsi que le cas échéant un élément de guidage (68), lequel est reçu à son extrémité solidairement en rotation par l'un des deux systèmes de bridage (34, 36), de préférence le système de bridage extérieur.

11. Dispositif selon la revendication 10, **caractérisé en ce que** ledit au moins un, en particulier les quatre, moyen(s) de levage/abaissement (62) du système de levage/abaissement (60) est/sont situé(s) approximativement à la même distance les uns des autres, de préférence sur une périphérie commune.

12. Dispositif selon la revendication 10 ou 11, **caractérisé en ce que** ledit au moins un, et en particulier les quatre, élément(s) porteur(s) (68) est/sont réalisé(s) sous la forme d'une broche filetée, en particulier d'une broche filetée auto-freinée, de préférence sous la forme d'une broche filetée trapézoïdale ou d'une broche à galets planétaires.

13. Dispositif selon l'une des revendications 1 à 12, **caractérisé en ce que** les deux systèmes de bridage (34, 36) comprennent chacun un moyen de rotation (78) pour entraîner une rotation relative des deux composants (12) en direction périphérique l'un par rapport à l'autre autour de l'axe longitudinal commun (38) des deux systèmes de bridage (34, 36).

14. Dispositif selon l'une des revendications 1 à 13, **caractérisé en ce que** le moyen de rotation (78) des deux systèmes de bridage (34, 36) comprend respectivement un élément porteur (80) réalisé approximativement sous forme annulaire, pour recevoir, brider et orienter les composants (12) les uns par rapport aux autres.

15. Dispositif selon l'une des revendications 1 à 14, **caractérisé en ce que** le moyen de rotation (78) des deux systèmes de bridage (34, 36) comprend respectivement un moyen d'entraînement (82) avec au moins un, en particulier deux, moteur(s) d'entraînement (84), qui est/sont agencé(s) sur le système de bridage (34, 36) respectif, et un élément d'entraînement (86), qui coopère avec le/les moteur(s) d'entraînement (84) et qui est associé à l'élément porteur (80), réalisé approximativement sous forme d'un anneau, du système de bridage (34, 36) respectif.

16. Dispositif selon la revendication 15, **caractérisé en ce que** l'élément d'entraînement (86), qui coopère avec ledit au moins un, en particulier les deux, moteur(s) d'entraînement (84), du moyen d'entraînement (82) du moyen de rotation (78) est doté à sa périphérie (90) d'un profilage (92), en particulier d'une denture, de dents ou d'une couronne dentée.

17. Dispositif selon l'une des revendications 1 à 16, **caractérisé en ce que** l'élément d'entraînement (86) du moyen d'entraînement (82) du moyen de rotation (78) est fixé du côté extérieur de manière indétachable sur l'élément porteur (80), réalisé approximativement sous forme d'un anneau, du système de bridage (34, 36) respectif.

18. Dispositif selon l'une des revendications 15 à 17, **caractérisé en ce que** ledit au moins un, en particulier les deux, moteur(s) d'entraînement (84), agencé sur le système de bridage (34, 36) respectif, du moyen d'entraînement (82) du moyen de rotation (78) est/sont respectivement écarté(s) les uns des autres, de préférence sur une périphérie commune, de manière approximativement égale.

19. Dispositif selon l'une des revendications 1 à 18, **caractérisé en ce que** les deux systèmes de bridage (34, 36) comprennent respectivement un élément de bridage (96, 96', 96"), susceptible d'être fixé de manière détachable sur l'élément porteur (80), réalisé approximativement en forme d'anneau, du système de bridage (34, 36) respectif, élément de bridage au moyen duquel le composant respectif (12) est susceptible d'être bridé et immobilisé sur l'élément porteur (80), réalisé approximativement sous forme d'un anneau, du système de bridage (34, 36) respectif.

20. Dispositif selon la revendication 19, **caractérisé en ce que** l'élément de bridage (96, 96', 96") est réalisé comme un système de serrage avec au moins un élément de serrage à coin et/ou au moins un élément de serrage à tuyau, une cage de serrage, une croix de serrage ou un filet de serrage.

21. Dispositif selon la revendication 20, **caractérisée en ce que** l'élément de serrage est réalisé rigide (96) et/ou capable de pivoter (96') en ouverture et en fermeture est/ou capable d'être déployé et rétracté (96') et/ou avec une combinaison de ces caractéristiques (96").

22. Dispositif selon l'une des revendications 1 à 21, **caractérisé en ce qu'**un moyen (98) pour usiner au moins une partie du/des deux composant(s) (12) analogues à des segments, à parois minces et en forme de profilé creux (12) est associé aux deux systèmes de bridage (34, 36).

23. Dispositif selon la revendication 22, **caractérisé en ce que** le moyen (98) pour usiner ladite au moins une partie du/des composant(s) (12) analogue(s) à des segments, à parois minces et en forme de profilé creux, est réalisé sous forme de dispositif de soudage, de brasage ou de collage, ou encore de dispositif de coupe ou de meulage, de dispositif de fraisage, de tournage ou de dispositif similaire destiné à l'usinage de surface par enlèvement de matière, ainsi que de dispositifs de contrôle de qualité et de contrôle de matière.

24. Utilisation d'un dispositif selon l'une des revendications précédentes pour le bridage, en particulier pour le bridage sans contrainte, pour le montage de composants (12) analogues à des segments, à parois minces et en forme de profilé creux, et de récipients, de coupoles ainsi que de boîtiers de fusées d'appoint ou des engins cylindriques creux similaires présentant de grandes dimensions.

25. Utilisation d'un dispositif selon l'une des revendications précédentes pour l'usinage, en particulier pour le soudage, le brasage ou le collage, ou encore pour la coupe, le meulage, le fraisage, le tournage ou l'usinage de surfaces analogues, de composants (12) analogues à des segments, à parois minces et de forme cylindrique creuse, de coupoles ainsi que de fusées d'appoint ou des engins cylindriques creux similaires présentant de grandes dimensions.

26. Utilisation du dispositif selon l'une des revendications précédentes pour la réalisation de composants (12) conçus à symétrie de révolution et/ou sans symétrie de révolution en forme de coque, en particulier en forme de demi-sphère, en forme de calotte sphérique, en forme de calotte, en forme de calotte ellipsoïdale, en forme conique, elliptique, en forme de "Cassini", en forme de demi-tore, ou présentant d'autres formes de section transversale similaires.

27. Utilisation du dispositif selon l'une des revendications précédentes pour la réalisation de coupoles pour des réservoirs de carburant de fusées, des réservoirs de satellites, des antennes paraboliques, des coques à réflecteur en forme de parabole, des collecteurs solaires en forme de parabole, des boîtiers de projecteurs, des fonds de récipients, des coupoles de tourelles, de calottes sous pression, ou similaires.
